# EUROPEAN PATENT APPLICATION

(11) **EP 3 940 929 A1**
(43) Date of publication of application: **19.01.2022**
(21) Application number: 20382643.3
(22) Date of filing: 16.07.2020
(51) Int. Cl.: H02K 9/197, H02K 1/20, H02K 3/24, H02K 9/19, H02K 9/08, H02K 7/18

(54) **COOLING OF ELECTRICAL MACHINES**

(71) Applicant: General Electric Renovables España S.L., 08005 Barcelona (ES)
(72) Inventor: ROMERO PEREZ, Sergio, 08005 Barcelona (ES); URRESTY, Julio Cesar, 08005 Barcelona (ES); MUÑIZ CASAIS, Cesar, 08005 Barcelona (ES); KELLER, Stefan, 08005 Barcelona (ES); CABRÉ GIMENO, Marc, 08005 Barcelona (ES)
(74) Representative: de Rooij, Mathieu Julien

(57) **Abstract**

An electrical machine (50) comprising a rotor (70), a stator (60), a stator cooling system (80) including stator cooling channels (66) conducting cooling fluid to active parts of the stator (60), and a rotor cooling system (90) for cooling active parts of the rotor (70) is provided. The rotor cooling system (90) is configured to provide a rotor cooling gas flow, and the rotor cooling gas flow is cooled by the stator cooling channels (66). Methods for cooling electrical machines (50) are also provided, as well as wind turbines comprising generators with cooling systems.

## Description

The present disclosure relates to electrical machines and more particularly relates to devices, systems and methods for cooling electrical machines. The present disclosure also relates to wind turbines comprising such electrical machines, and in particular to wind turbines comprising cooling gas flows for cooling parts of a generator rotor.

### BACKGROUND

Electrical machines, such as motors and generators, generally comprise a rotor structure and a stator structure. Large electrical generators may be permanent magnet excited generators (PMG) or electrically excited synchronous generators (EESG).

Such generators may be used for example in wind turbines, in particular in offshore wind turbines.

Wind turbines generally comprise a rotor with a rotor hub and a plurality of blades. The rotor is set into rotation under the influence of the wind on the blades. The rotation of the rotor shaft either directly drives the generator rotor ("directly driven") or through the use of a gearbox. Such a direct drive wind turbine generator may have e.g. a diameter of 6 - 10 meters (236 - 328 inches), a length of e.g. 2 - 3 meters (79 - 118 inches) and may rotate at low speed, for example in the range of 2 to 20 rpm (revolutions per minute). Alternatively, permanent magnet generators or electrically excited synchronous generators may also be coupled to a gearbox which increases the rotational speed of the generator to for example between 50 to 500 rpm or even more.

Electrical machines comprise a rotor which rotates with respect to the stator. The rotor may be the inner structure and the stator the outer structure. The stator in this case thus surrounds the rotor. Alternatively, the configuration may be opposite to this, i.e. the rotor surrounds the stator.

In case of permanent magnet excited generators (PMG), permanent magnets (PM) are generally comprised in the rotor (although they could also be arranged alternatively in the stator structure), whereas winding elements (e.g. coils) are usually included in the stator (although they could alternatively be arranged in the rotor structure). Permanent magnet generators are generally deemed to be reliable and require less maintenance than other generator typologies.

Electrically excited synchronous generators generally comprise a rotor having a plurality of pole shoes and excitation coils. In use, a current is applied to the excitation coils which create the polarity of the poles. Adjacent poles have a different magnetic polarity. As the rotor turns, the magnetic field from the pole shoes is applied to the windings of the stator causing a variable magnetic flux in the stator windings which produces a voltage in the stator windings. In electrically excited synchronous generators the magnetic field to generate the electrical power is created electrically. As a result, such generators do not require the use of permanent magnet containing rare earth elements.

Cooling is generally important in electrical machines, since the active elements (particularly coils and/or magnets) heat up in use. A too high temperature can lead to failure of these elements and to less efficient operation.

In radial machines, a substantially annular air gap may be formed between rotor and stator. Due to the motion of the rotor, the air in the air gap is moved around. The air hereby provides a cooling effect. In an electrical machine with a relatively high torque density (i.e. a high torque in electrical machines of relatively small dimensions) the cooling provided by cooling air may not be sufficient.

One potentially effective way of cooling a hot structure is through the use of cooling channels conducting a cold liquid through the structure. This can be an effective way of cooling a stator, but it is very complicated to use liquid cooling in a rotor because of the rotational movement.

A cold liquid may be provided and the cold liquid passes through the stator and thereby cools the stator. The cooling liquid itself heats up. After passing through the stator, the heated up cooling liquid needs to be cooled down. The cooling liquid may be cooled down again in a liquid-liquid or liquid-air heat exchanger.

In these electrical machines, in order to provide effective cooling of the rotor, an additional rotor cooling system may be provided including a fan or ventilator providing a cooling air flow through the air gap. As the cooling air passes through the air gap, it cools down active elements of the rotor and at the same heats up. The cooling air that has been heated up is either exhausted, or needs to be cooled down again to be recirculated. If the hot air is exhausted, still a continuous supply of cold cooling air is needed. If the hot air is cooled down, this may be done in an air-liquid or air-air heat exchanger.

The cooling of both the cooling liquid for the stator and the cooling air of the rotor in the end means that a liquid cooled generator needs to have liquid cooling paths leading into the stator and additionally needs an external heat exchanger primarily to cool the rotor with its associated liquid and air ducts into the active parts. The integration may be relatively complex, especially in compact generators such as the ones used in wind turbines.

The size and type of electrical machines and the potential problems described herein are not limited to generators in direct drive offshore applications, and not even to the field of wind turbines only. Electrical machines of considerable dimensions that may suffer from the same problems and/or have the same complications may also be found e.g. in steam turbines and water turbines.

The present disclosure provides examples of systems and methods that at least partially resolve some of the aforementioned disadvantages.

### SUMMARY

In a first aspect, an electrical machine is provided comprising a rotor, a stator, and a stator cooling system including stator cooling channels conducting cooling fluid to active parts of the stator. The electrical machine further comprises a rotor cooling system for cooling active parts of the rotor, wherein the rotor cooling system is configured for providing a rotor cooling gas flow. The stator cooling channels are configured for cooling the rotor cooling gas flow.

In accordance with this aspect, the cooling gas flow for cooling the rotor is cooled by the same cooling system that cools the stator. This can make the cooling system more efficient and easier to integrate.

Active parts as used throughout the present disclosure may be regarded as elements that have an active role in the generation of a magnetic field and the resulting generation of electrical currents in the electrical machine during operation. Active parts as used herein may be regarded as including e.g. permanent magnets, stator windings, rotor windings, field windings, and armature windings. The terminology "coil" and "winding" are herein used interchangeably.

In a further aspect, a method for cooling an electrical machine is provided. The method comprises cooling parts of a stator by passing liquid through cooling channels in the stator, and cooling parts of a rotor with a cooling gas flow. The cooling gas flow when heated up is directed towards the cooling channels in the stator to cool down the rotor cooling gas flow.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 illustrates a detailed, internal view of a nacelle of a wind turbine according to one example;
Figure 3 schematically represents a method for cooling an electrical machine;
Figures 4A - 4D schematically illustrates an example of a cooling system in an electrical machine;
Figure 5 schematically illustrates a structural detail of a cooling system in an electrical machine;
Figure 6 schematically illustrates a further example for cooling an electrical machine; and
Figure 7 schematically illustrated yet a further example for cooling an electrical machine.

### DETAILED DESCRIPTION OF EXAMPLES

In these figures the same reference signs have been used to designate matching elements.

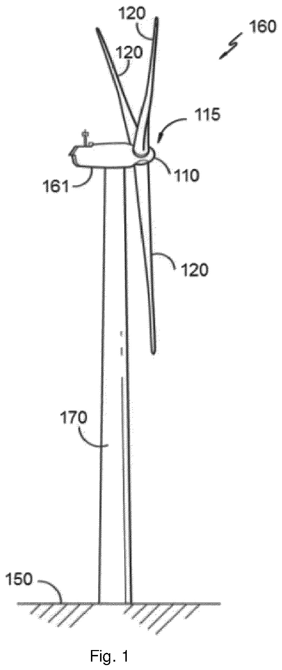

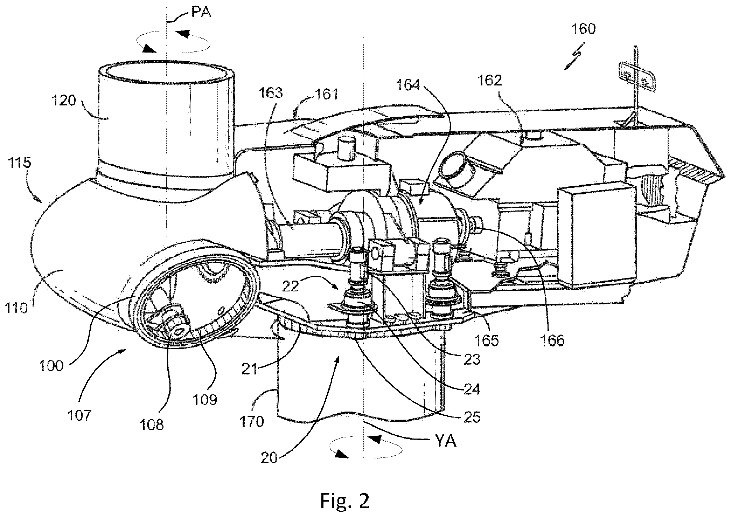

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated embodiment, the rotor 115 includes three rotor blades 120. However, in an alternative embodiment, the rotor 115 may include more or less than three rotor blades 120. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (Figure 2) positioned within the nacelle 161 to permit electrical energy to be produced.

Figure 2 illustrates a simplified, internal view of one example of the nacelle 161 of the wind turbine 160 of the Figure 1. As shown, the generator 162 may be disposed within the nacelle 161. In general, the generator 162 may be coupled to the rotor 115 of the wind turbine 160 for generating electrical power from the rotational energy generated by the rotor 115. For example, the rotor 115 may include a main rotor shaft 163 coupled to the hub 110 for rotation therewith. The generator 162 may then be coupled to the rotor shaft 163 such that rotation of the rotor shaft 163 drives the generator 162. For instance, in the illustrated embodiment, the generator 162 includes a generator shaft 166 rotatably coupled to the rotor shaft 163 through a gearbox 164.

It should be appreciated that the rotor shaft 163, gearbox 164, and generator 162 may generally be supported within the nacelle 161 by a support frame or bedplate 165 positioned atop the wind turbine tower 170.

The nacelle 161 is rotatably coupled to the tower 170 through the yaw system 20 in such a way that the nacelle 161 is able to rotate about a yaw axis YA. The yaw system 20 comprises a yaw bearing having two bearing components configured to rotate with respect to the other. The tower 170 is coupled to one of the bearing components and the bedplate or support frame 165 of the nacelle 161 is coupled to the other bearing component. The yaw system 20 comprises an annular gear 21 and a plurality of yaw drives 22 with a motor 23, a gearbox 24 and a pinion 25 for meshing with the annular gear 21 for rotating one of the bearing components with respect to the other.

Blades 120 are coupled to the hub 110 with a pitch bearing 100 in between the blade 120 and the hub 110. The pitch bearing 100 comprises an inner ring and an outer ring. A wind turbine blade may be attached either at the inner bearing ring or at the outer bearing ring, whereas the hub is connected at the other. A blade 120 may perform a relative rotational movement with respect to the hub 110 when a pitch system 107 is actuated. The inner bearing ring may therefore perform a rotational movement with respect to the outer bearing ring. The pitch system 107 of Figure 2 comprises a pinion 108 that meshes with an annular gear 109 provided on the inner bearing ring to set the wind turbine blade into rotation around a pitch axis PA.

The energy produced by the generator may be delivered to a converter which adapts the output electrical power of the generator to the requirements of the power grid. The electrical machine may comprise electrical phases, e.g. three electrical phases. The converter may be arranged inside the nacelle or inside the tower or externally.

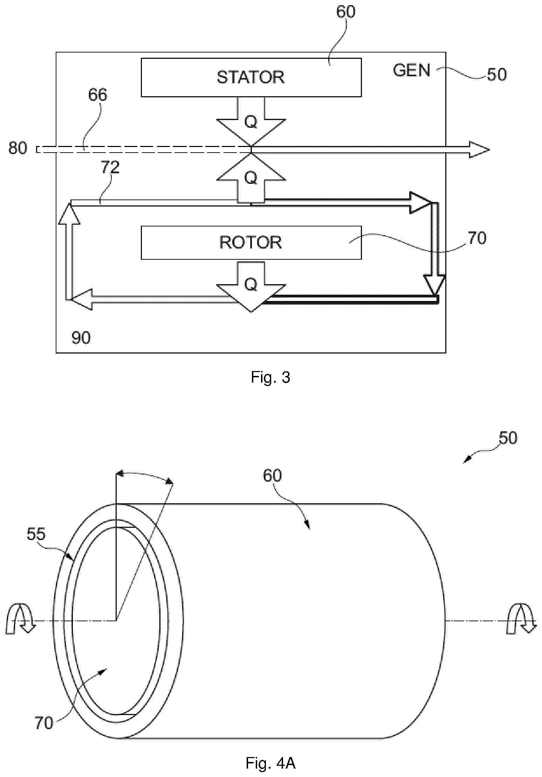

Figure 3 schematically represents a method for cooling an electrical machine.

In an aspect of the present disclosure, a method for cooling an electrical machine 50 is provided. The method comprises cooling parts of a stator by passing liquid 80 through cooling channels 66 in the stator 60, and cooling parts of a rotor 70 with a cooling gas flow 90. The cooling gas flow 90 is cooled by the liquid in the cooling channels 66 in the stator.

It may be seen in figure 3, that cold liquid is provided in cooling channels 66 and is heated up as it passes through the stator. A heat flow occurs from the stator to the liquid flow 80. The cold liquid is also in a heat exchange relationship with cooling air flow 90. The cooled down gas can be passed along a rotor to cool down active parts of the rotor, e.g. permanent magnets or coils. In particular, the cold gas may be passed through an air gap between rotor and stator.

The cooling gas may be cooling air, although other gases could be envisaged. Throughout the present disclosure, reference will generally be made to an air flow, but it should be clear that other gases might be used.

As the cold air passes along the rotor, the air heats up, i.e. heat flow occurs from warm parts of the rotor towards the cold air. The heated up air may be recirculated back towards the rotor, but towards this end, it needs to be cooled down again. As it may be seen in figure 3, the same cooling liquid used for cooling the stator may be used for this purpose. There may thus not be any need for an additional active cooling system of the rotor cooling gas flow. I.e. there may be no cooler or heat exchanger external to the generator for cooling down the rotor cooling gas flow.

The cooling air flow may be driven by one or more fans or ventilators. In order to provide a sufficient mass air flow towards the rotor, one or more fans may be provided.

In some examples, the method may further comprise cooling the liquid (in cooling channels 66) after passing through the cooling channels in the stator. E.g. a liquid-liquid or liquid-air heat exchanger may be used for cooling the heated up liquid.

The liquid for cooling parts of the stator may be water, but may also be any other heat transfer liquid suitable for cooling.

Figures 4A - 4D schematically illustrate an example of a cooling system in an electrical machine 50. Figure 4A illustrates an electrical machine 50, which in some examples may be an electrical generator. The generator may be a permanent magnet generator, and more particularly may be a direct driven generator in a wind turbine.

In the example, the electrical generator comprising a rotor 70 which is configured to rotate about a rotational axis, and a stator 60 radially surrounding the rotor. A radial air gap 55 is arranged between rotor 70, and stator 60.

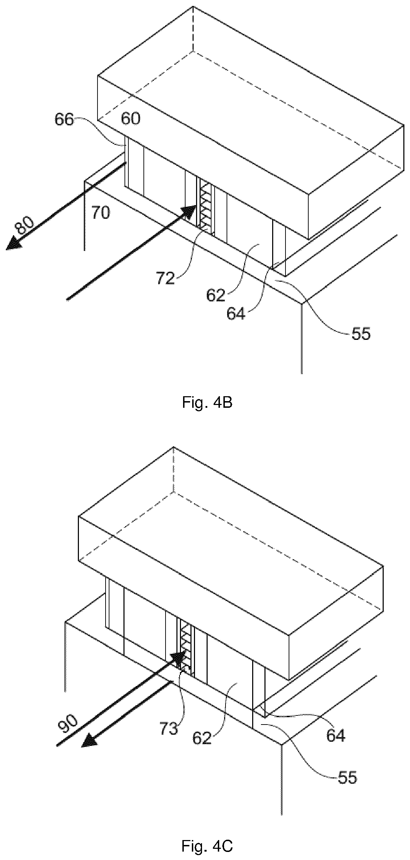

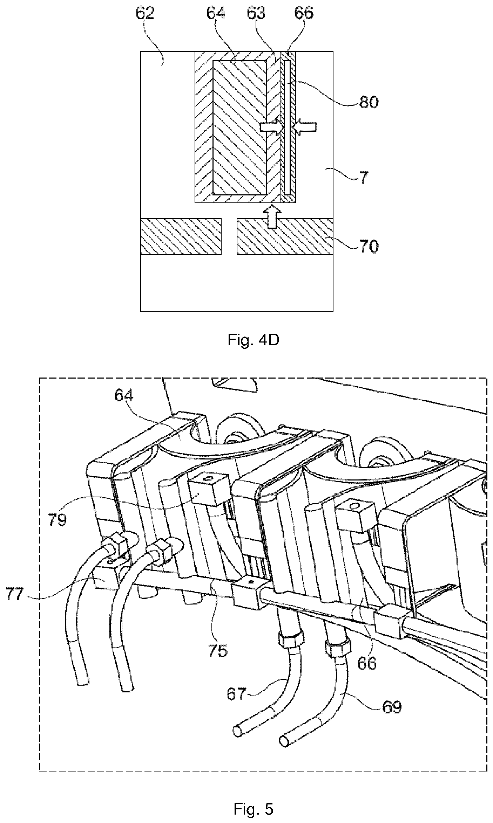

Various aspects of the disclosure will thus be explained with reference to the example of figure 4, in which a stator 60 is arranged radially around the rotor 70. It should be clear however, that the same or similar reasonings will apply when the rotor radially surrounds the stator, and also if the rotor and stator are axially separated, i.e. an axial air gap is provided. Also the same may be applied to motors instead of generators.

With reference to figures 4B and 4C, it may be seen that the electrical machine 50 comprises a rotor 70, a stator 60, and a stator cooling system 80 including stator cooling channels 66 conducting cooling fluid to active parts of the stator 60. The electrical machine 50 further comprises a rotor cooling system 90 for cooling active parts of the rotor, wherein the rotor cooling system is configured to provide a rotor cooling gas flow, wherein the the stator cooling channels 66 are configured for cooling down the rotor cooling gas flow.

In some examples, one or more fans or ventilators may be used to provide the rotor cooling gas flow.

In some examples, the stator 60 may comprise electrical coils 64 and the stator cooling channels are provided along one or more of the electrical coils 64, as is shown in the examples of figure 4 and 5.

In this particular example, the stator cooling channels 66 surround one or more of the electrical coils 64. The stator comprises cooling jackets surrounding the electrical coils 64, and the cooling jackets may comprise one or more stator cooling channels.

The coils 64 may be arranged around teeth 62 on the stator, the teeth forming the stator core. In between two neighbouring coils, a plurality of gas cooling channels 72 may be provided. The gas cooling channels 72 may thus be in direct heat exchange configuration with the liquid used for cooling the stator.

The liquid for cooling the stator may be water. The cooling gas flow may be cooling air, but other gases might be used.

The rotor cooling air flow 90 may be provided through an air gap between the rotor 70 and the stator 60. The cooling air flow 90 may thus flow and come in contact with the active parts of the rotor, e.g. electrical coils or permanent magnets. In this particular example, the active parts may be permanent magnets.

The rotor cooling system may comprise one or more air flow channels 72 in contact with the stator cooling channels upstream from the air gap 55.

In the example of figures 4B and 4C, several air cooling channels 72 may be arranged radially on top of each other. They may be separated by walls 73. Within the air cooling channels, any of the following options may be provided to increase contact of the air flow with the sidewalls of the channels and thereby increase heat transfer from the cooling liquid to the air flow: roughness, vortex generators, baffles, deflector vanes etc. In examples, the channels may include fins to increase the heat exchange surface.

Figure 4D schematically illustrates the arrangement of the cooling jacket, air flow channels, and cooling liquid channels in a bit more detail. (Part of the) stator core is indicated with reference sign 62, and half of the coil surrounding the core may be seen at reference sign 64. An insulation 63 surrounds the electrical coil 64. The insulation does not conduct electricity, or has a very high resistance to it, but preferably conducts heat relatively well. One side of jacket 66 is shown to be in contact with the insulation 63. The jacket 66 conducts cooling liquid 80.

Figure 5 schematically illustrates a structural detail of a cooling system in an electrical machine. In the shown example, the electrical coils 64 may have a substantially oblong shape, surrounding a stator tooth. The coils may have two substantially parallel and straight sides, and at either end, curved portions are provided. In a radial machine, the curved end portions are provided at one axial end and at the opposite axial end.

Figure 5 shows a partial view of an end of a coil 64. Cooling jacket 66 which may comprise one or more channels for the cooling liquid is a relatively thin elongate body arranged contiguous with the coil 64, or rather the insulation surrounding the coil 64. The cooling jacket may be made e.g. from aluminum.

The cooling jackets may be formed by two thin metal sheet walls having a substantially constant distance between the sheet metal walls.

Cold liquid enters cooling jacket 66 at inlet 67. The liquid heats up as it flows along the coil, and leaves the cooling jacket as a heated up liquid at outlet 69. From liquid outlet 69, the cooling liquid may be supplied to a cooling system for reducing the temperature of the cooling liquid, such that it can be recirculated again. In an example, a liquid-liquid heat exchanger may be used to cool down the cooling liquid. Any suitable system may be used for providing cooling liquid or cooling down the cooling liquid again. In examples according to the present disclosure, there is no need for an air-liquid or air-air heat exchanger for cooling down the rotor cooling gas flow, since the rotor cooling gas flow is only (actively) cooled by the stator cooling channels. The stator cooling channels may be configured (sized and shaped and arranged) such that their cooling capacity is sufficient for cooling down the stator directly and cooling down the rotor indirectly.

Electrical connections to the coils are indicated with reference signs 75, 77 and 79 in this figure. The cooling air may flow freely in spaces between the electrical connections and water connections.

The air cools down as it flows along the cooling jacket, and the cold (or cooler) air may be directed towards the air gap.

Even though in these examples, cooling jackets have been shown, it should be clear that any sort of liquid cooling body may be provided, e.g. one or more pipes, tubes or other conduits may be used as well.

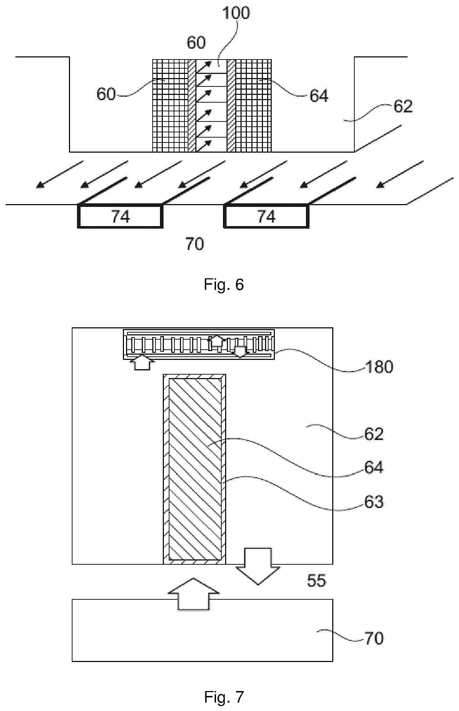

Figure 6 schematically illustrates a further example for cooling an electrical machine. The electrical machine may be a permanent magnet generator. The permanent magnet generator may have a generator rotor 70 and a generator stator 60. The generator rotor 70 may carry a plurality of (rows of) permanent magnets 74. In some examples, multiple permanent magnets may be included in a permanent magnet module. Such a permanent magnet module may be attached at its base to a rotor rim.

A cooling gas (e.g. air) flow may flow through the air gap along the permanent magnets 74. In some examples, the air gap may be radially arranged between rotor and stator, and the cooling air flow traverses the air gap axially.

Before the cooling gas flow reaches the air gap it may have been cooled down by liquid cooling channels in the stator. In this particular example, a single heat exchanger body may be provided which is arranged between electrical coils 64. The single heat exchanger body 100 combined liquid cooling channels in heat exchange with the electrical coils and at the same time in heat exchange relationship with air passages.

Figure 7 schematically illustrated yet a further example for cooling an electrical machine. In the examples of figures 4 and 5, liquid cooling channels were shown to be in direct contact with the electrical coils, and in particular were shown as cooling jackets surrounding the electrical coils.

In the example of figure 7, the liquid cooling channels may instead be provided in another part of the stator 60. In particular the cooling channels may be provided in a stator core 62, for example in a base of the stator teeth. The air flow channels in contact with the stator cooling channels may also be provided in the stator core 62.

In the example of figure 7, air flow channels and stator cooling channels are integrated in a single heat exchanger device 100, which may be integrated in the stator.

In an aspect of the present disclosure, a wind turbine is provided, which comprises a rotor with a plurality of blades, and a generator operatively connected with the rotor. The generator may be according to any of the examples disclosed herein.

In accordance with an aspect, the generator comprises a generator rotor and a generator stator, and an air gap between the generator rotor and the generator stator. The generator further comprises a stator cooling system comprising stator cooling channels with cooling liquid, and a rotor cooling system comprising a fan to provide a cooling air flow through the air gap. The cooling air flow is positioned in heat exchange arrangement with the stator cooling channels prior to flowing through the air gap.

In some examples, the stator comprises a plurality of electrical coils, and further comprises cooling jackets surrounding the electrical coils. Cooling jackets are however merely an example of integrating the liquid cooling channels.

In some examples, the cooling air flow channels may be arranged between the cooling jackets.

In some examples, the cooling air flow channels and stator cooling channels may be integrated in single heat exchanger device. In other examples, the cooling air flow channels may form a cooling air device, that is separate but placed in contact a stator cooling device.

In some examples, the rotor cooling system may comprise a closed cycle for the cooling air. A closed cycle for the cooling air may be most efficient since only small amounts of intake air would need to be filtered in a continuous manner. The heat exchange with the stator cooling channels can provide efficient cooling for the cooling air.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. An electrical machine (50) comprising:
a rotor (70),
a stator (60),
a stator cooling system (80) including stator cooling channels (66) conducting cooling liquid to active parts of the stator (60), and
a rotor cooling system (90) for cooling active parts of the rotor (70), wherein the rotor cooling system (90) is configured for providing a rotor cooling gas flow, wherein
the stator cooling channels (66) are configured for cooling the rotor cooling gas flow.

2. The electrical machine according to claim 1, wherein the rotor cooling system (90) comprises gas flow channels (72) in contact with the stator cooling channels (66).

3. The electrical machine according to claim 1, wherein the stator (60) comprises electrical coils (64) and the stator cooling channels (66) are provided along one or more of the electrical coils, and optionally wherein the stator cooling channels (66) surround one or more of the electrical coils (64).

4. The electrical machine according to claim 3, wherein the stator (60) comprises cooling jackets surrounding the electrical coils (64), the cooling jackets comprising one or more stator cooling channels.

5. The electrical machine according to any of claims 2 - 4, wherein the gas flow channels (72) in contact with the stator cooling channels (66) are provided between neighbouring electrical coils (64) of the stator (60).

6. The electrical machine according to claim 1, wherein the gas flow channels (72) in contact with the stator cooling channels (66) are provided in a stator core.

7. The electrical machine according to any of claims 1 - 6, wherein the rotor cooling gas flow (90) is provided through an air gap (55) between the rotor (70) and the stator (60).

8. The electrical machine according to any of claims 1 - 7, wherein the rotor cooling system comprises one or more gas flow channels (72) in contact with the stator cooling channels (66) upstream from the air gap (55).

9. The electrical machine according to any of claims 1 - 8 wherein one or more of the gas flow channels (72) comprise deflectors to modify turbulence in the air flow channels.

10. The electrical machine according to any of claims 1 - 9, further comprising a liquid-liquid or liquid-air heat exchanger to cool heated up cooling fluid.

11. A wind turbine comprising a generator, wherein the generator is the electrical machine according to any of claims 1 - 10.

12. The wind turbine according to claim 11, wherein the generator is a direct driven permanent magnet generator.

13. A method for cooling an electrical machine (50), comprising:
cooling parts of a stator (60) by passing liquid through cooling channels (66) in the stator (60),
cooling parts of a rotor (70) with a rotor cooling gas flow, and
directing the rotor cooling gas flow when heated up to the cooling channels (66) in the stator (60) to cool down the rotor cooling gas flow.

14. The method of claim 13, wherein the cooling gas flow is a cooling air flow.

15. The method of claim 13 or 14, further comprising cooling the liquid after passing through the cooling channels (66) in the stator (60).
